# FASCICULE DE BREVET EUROPEEN

(11) **EP 2 873 614 B1**
(45) Date de publication et mention de la délivrance du brevet: **22.06.2016**
(21) Numéro de dépôt: 14193116.2
(22) Date de dépôt: 13.11.2014
(51) Int. Cl.: A63H 27/00, B64C 39/02

(54) **Drone à voilure tournante avec hélices à entraînement direct et montage rapide**
Drehflügel-Drone mit Direktantriebsschrauben und Schnellmontage
Rotary-wing drone with direct-drive propellers and quick assembly

(30) Priorité: 13.11.2013 FR 1361061
(43) Date de publication de la demande: 20.05.2015
(73) Titulaire: Parrot, 75010 Paris (FR)
(72) Inventeur: Caubel, Christine, 75014 Paris (FR)
(74) Mandataire: Dupuis-Latour, Dominique

(56) Documents cités:
- CH-A- 333 967
- DE-A1-102005 010 336
- DE-A1-102009 003 142
- DE-A1-102013 206 478
- FR-A1- 2 689 938
- FR-A5- 2 117 376
- US-A- 4 363 604

## Description

L'invention concerne les drones à voilure tournante, tels que les quadri-coptères.

Ces drones sont pourvus de plusieurs blocs propulseurs avec pour chacun une hélice entrainée par un moteur propre. Les différents moteurs sont commandables de manière différenciée pour piloter le drone en attitude et en vitesse.

Un exemple typique d'un tel drone est le AR.Drone de Parrot SA, Paris.

Le WO 2011/058257A1 décrit plus précisément la structure des blocs propulseurs de ce drone, qui comportent chacun une hélice entrainée par un moteur électrique via un système de réduction de la vitesse de rotation, généralement très élevée, de ce moteur. Le bloc propulseur est par ailleurs prolongé en partie inférieure par une excroissance formant patin sur lequel le drone peut reposer lorsqu'il est au sol, ce qui évite de prévoir des pieds supplémentaires sur le corps du drone.

Le bloc propulseur doit être facilement démontable, pour permettre le changement du moteur aussi bien que celui de l'hélice, par exemple en cas d'endommagement de cette dernière après un choc contre un obstacle.

Si l'on souhaite réduire la taille du drone, cette réduction vaut aussi pour les dimensions des hélices. De ce fait, pour disposer d'une même force portante avec des hélices plus petites, il convient d'augmenter significativement leur vitesse de rotation, ce qui conduit à utiliser des moteurs à entrainement direct, sans réducteur de vitesse. Il peut s'agir notamment de moteurs de type synchrone sans balais à cage tournante, comprenant un stator relié au corps du drone et portant les bobinages, associé à un rotor constitué par la cage tournante avec ses éléments magnétiques.

L'hélice est dans ce cas montée directement sur la cage du rotor, et tourne à la même vitesse que cette dernière. Concrètement, l'hélice est solidarisée à la cage tournante par des vis, ou montée sur celle-ci par un écrou central qui vient la plaquer sur le dessus de la cage.

Le DE 10 2005 010 336 A1 décrit un tel système de montage d'une hélice sur un drone.

Cette configuration présente deux inconvénients.

En premier lieu, l'encombrement en hauteur du bloc propulseur comprend la hauteur du moteur à laquelle s'ajoute l'épaisseur de l'hélice, correspondant principalement à la hauteur des pales, puisque du fait de l'entrainement direct l'hélice est nécessairement située au-dessus du moteur, dans le prolongement de la cage tournante. Cet encombrement va à l'encontre de la réduction de taille du drone évoquée plus haut.

En second lieu, pour monter et démonter chaque hélice il est nécessaire de disposer d'un outil tel qu'un tournevis ou une clé, ou de prévoir une pièce de blocage supplémentaire qui risque d'être perdue à l'usage. Si l'on souhaite un système de fixation par emboitement, on se heurte à une difficulté résultant du fait que l'hélice est solidaire de la cage tournante et que cette dernière est totalement libre en rotation lorsque le moteur n'est pas alimenté. Au démontage, il sera très difficile de séparer l'hélice emboitée sur la cage qui n'est jamais freinée, à la différence d'un système conventionnel où le train réducteur interposé entre le moteur et l'hélice oppose une résistance à la rotation de l'hélice lorsque cette dernière est sollicitée manuellement en rotation.

Les CH 333 967 A et FR 2 117 376 A5 décrivent encore d'autres systèmes de montage d'hélice pour jouet volant.

Le but de l'invention est de résoudre ces deux difficultés, en proposant un nouveau système d'accouplement entre une hélice et une cage tournante de moteur synchrone qui :
- minimise l'encombrement en hauteur de l'ensemble moteur-hélice ;
- autorise une fixation et un démontage rapides, sans outil, de l'hélice sur la cage tournante du moteur ; et
- permette de tenir et d'immobiliser aisément la cage du rotor avec l'hélice montée dessus, ceci d'une seule main, afin que l'utilisateur puisse saisir l'hélice avec son autre main, afin de découpler cette dernière du moteur.

On verra également que l'invention permet de disposer d'un moyen de détrompage simple entre des hélices visuellement ressemblantes mais conçues pour tourner dans des sens contraires. En effet, dans un quadricoptère deux hélices diamétralement opposées tournent dans un même sens, qui est l'opposé de celui des deux autres hélices. Les hélices rotatives et contrarotatives ne sont pas identiques, et sont visuellement difficiles à distinguer, de sorte qu'il peut être utile de disposer d'un système de détrompage interdisant par exemple de monter des hélices d'un type donné sur des moteurs tournant dans le sens opposé de celui pour lequel ces hélices ont été conçues.

Pour atteindre les buts précités, l'invention propose un drone à voilure tournante du type connu par exemple d'après le DE 10 2005 010 336 A1 précité, c'est-à-dire comprenant un corps de drone et une pluralité de blocs propulseurs comprenant chacun : une hélice comprenant un moyeu et une pluralité de pales ; et un moteur électrique du type moteur synchrone sans balais à cage tournante, avec un stator relié au corps du drone et un rotor mobile autour d'un axe de rotation du moteur pour l'entrainement de l'hélice. Le bloc propulseur est du type à entrainement direct, le rotor est solidaire en rotation du moyeu de l'hélice et solidaire d'un flasque supérieur s'étendant dans un plan radial par rapport à l'axe de rotation, et il est prévu des moyens d'agrippement de ce flasque.

De façon caractéristique de l'invention, il est prévu des moyens réversibles de couplage rapide de l'hélice au rotor entre une position découplée, permettant l'emboitement du moyeu sur le flasque, et une position verrouillée solidarisant mécaniquement en rotation le moyeu sur le flasque. Le passage de la position découplée à la position verrouillée est opéré par une rotation relative d'une fraction de tour du moyeu de l'hélice par rapport au flasque dans un sens contraire du sens de rotation du moteur électrique, et les moyens d'agrippement du flasque sont des moyens d'agrippement dans ladite position verrouillée.

Dans une forme particulière de mise en oeuvre, les moyens réversibles de couplage rapide comprennent avantageusement : sur le flasque, une pluralité de pions disposés radialement à distance de l'axe de rotation, chaque pion comprenant une partie de tige surmontée par une tête élargie propre à assurer la retenue du moyeu contre le flasque ; et sur le moyeu, une pluralité de boutonnières dont le nombre et la disposition correspondent au nombre et à la disposition des pions sur le flasque, chaque boutonnière comprenant une fente curviligne s'étendant le long d'une circonférence, la largeur de la fente correspondant à la partie de tige du pion qui lui correspond, et la fente comprenant à une première extrémité une partie agrandie dont la dimension permet l'introduction de la tête du pion.

Selon diverses caractéristiques subsidiaires avantageuses :
- en position verrouillée, la tête de pion fait saillie au-dessus de la surface supérieure du moyeu ;
- les moyens d'agrippement du flasque comprennent une partie saillante avec une arête, formée sur les têtes des pions ;
- les bords de la fente présentent une épaisseur accrue à proximité d'une seconde extrémité opposée à la première extrémité, cette épaisseur étant définie, par rapport à l'écartement entre la surface supérieure du flasque et la surface inférieure de la tête de pion de manière à créer avec la tête de pion, de manière à réaliser avec la tête de pion un ajustement avec jeu en position découplée et un ajustement serré en position verrouillée ;
- le rotor comprend une jupe latérale cylindrique s'étendant à partir du flasque supérieur, cette jupe portant des éléments magnétiques de la cage tournante et définissant avec le flasque un volume intérieur logeant des bobinages du stator du moteur ;
- il est en outre prévu des moyens détrompeurs, comprenant un axe du rotor faisant saillie, ou non, au-dessus du flasque et un orifice central formé, ou non, dans le moyeu, de manière à empêcher l'emboitement d'un moyeu dépourvu d'orifice central sur un flasque pourvu d'un axe saillant.

On va maintenant décrire un exemple de réalisation de l'invention, en référence aux dessins annexés où les mêmes références désignent d'une figure à l'autre des éléments identiques.
La Figure 1 est une vue en perspective d'un drone selon l'invention, avec ses quatre groupes propulseurs.
La Figure 2 est une vue de détail en perspective de la partie centrale d'une hélice du drone selon l'invention, cette hélice étant considérée isolément en montrant le moyeu et la naissance des pales.
La Figure 3 est une vue en perspective du moteur d'entrainement à cage tournante, considéré isolément avant montage de l'hélice.
La Figure 4 est une vue du groupe propulseur en coupe par un plan axial, avec l'hélice solidarisée au moteur, cette figure montrant notamment la structure interne du moteur à cage tournante et la manière dont le moyeu de l'hélice est solidarisé à cette cage tournante.
Les Figures 5a et 5b sont des vues en perspective du moteur et de l'hélice destinées à expliquer la manière de monter l'hélice sur le moteur, respectivement au moment du positionnement de l'hélice au-dessus de la cage tournante du moteur, et après assemblage final de ces deux éléments.

On va maintenant décrire un mode de réalisation de l'invention, qui n'est donné qu'à titre d'exemple non limitatif, de très nombreuses variations des différents éléments décrits pouvant être envisagées sans sortir du cadre de l'invention.

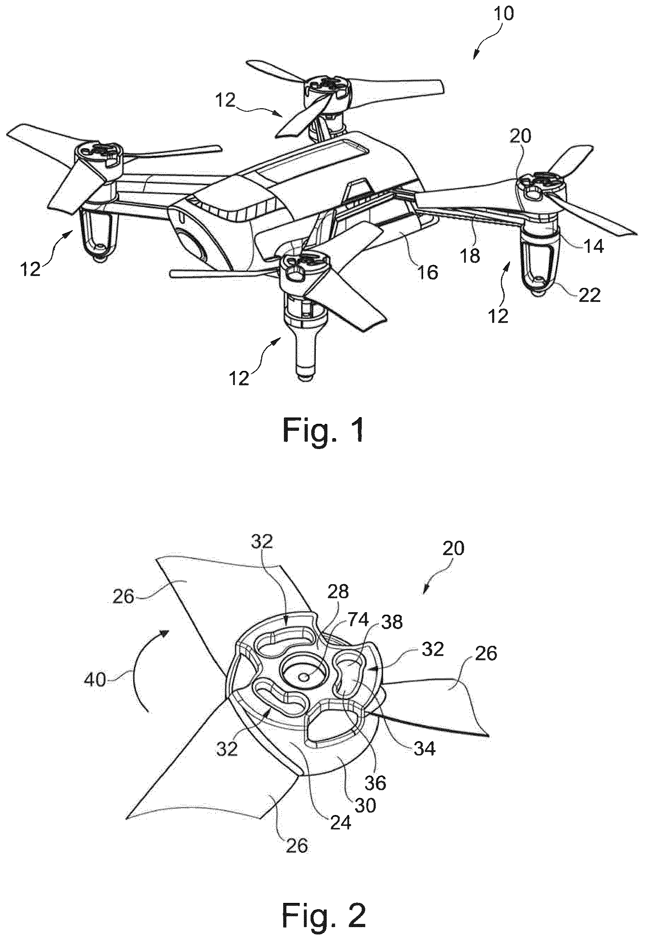

Sur la Figure 1, la référence 10 désigne de façon générale un drone du type quadricoptère, avec quatre groupes propulseurs 12. Chaque groupe propulseur 12 comprend une partie fixe 14 logeant le moteur d'entrainement et reliée au corps 16 du drone par un bras 18. Le moteur de chaque groupe propulseur entraine en rotation une hélice respective 20 s'étendant dans un plan approximativement horizontal au-dessus de la partie fixe 14 et du bras 18. En partie inférieure, le bloc propulseur est prolongé par un étrier formant pied 22 sur lequel pourra reposer au sol le drone.

La Figure 2 illustre en perspective la partie centrale d'une hélice du drone selon l'invention, considérée isolément.

Cette hélice comporte essentiellement un moyeu 24 à partir duquel s'étendent radialement des pales 26, par exemple au nombre de trois dans l'exemple illustré. Le moyeu 24 et les pales 26 sont avantageusement réalisés sous forme monobloc, par exemple à partir d'une matière plastique moulée d'une seule pièce.

De façon caractéristique, le moyeu 24 comprend une paroi supérieure 28 en forme de disque plat prolongée à sa périphérie par une paroi extérieure cylindrique 30 portant les pales 26. La paroi supérieure 28 est munie d'une pluralité de boutonnières 32, de préférence en nombre égal à celui des pales, constituées chacune d'une fente 34 de largeur sensiblement constante, cette fente étant curviligne et s'étendant à distance de l'axe central du moyeu le long d'une circonférence. La fente 34 comporte deux extrémités arrondies, avec une extrémité avant 36 et une extrémité arrière 38 (ces dénominations correspondant au sens de rotation de l'hélice, telle que représentée par la flèche 40). L'extrémité avant est arrondie et présente une largeur identique à celle de la fente, tandis que l'extrémité arrière 38 est élargie, avec par exemple une forme circulaire de diamètre légèrement supérieur à celui de la largeur du reste de la fente.

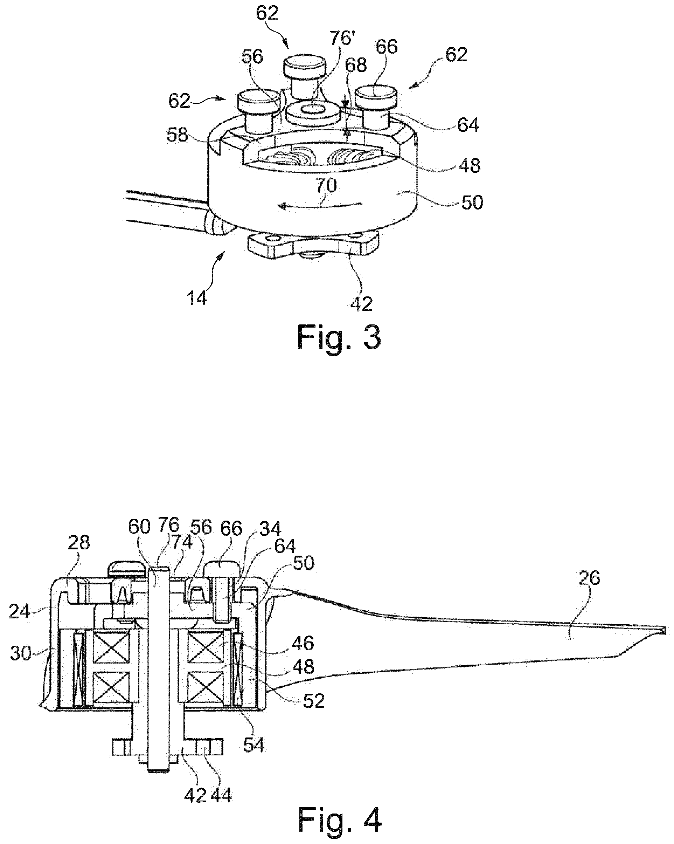

Les Figures 3 et 4 illustrent la structure du moteur à cage tournante, considéré isolément (Figure 3, en perspective) ou avec l'hélice montrée dessus (Figure 4, en coupe). Le moteur 14 comprend une partie fixe 42 formant support, solidaire du bras 18 de liaison au corps du drone et pourvue d'orifices 44 pour permettre le vissage du pied 22 lors d'une opération de démontage.

La partie fixe du moteur porte également une pluralité de bobinages fixes 46 enroulés sur des mandrins respectifs 48, ces bobinages 46 étant enroulés autour d'un axe orienté radialement par rapport à l'axe de rotation du moteur et constituant les différents éléments du stator du moteur synchrone permettant la création d'un champ tournant entre les différents bobinages.

L'autre élément du moteur est le rotor, constitué d'une cage tournante 50 à laquelle sera solidarisée l'hélice aux fins d'entrainement direct de cette dernière.

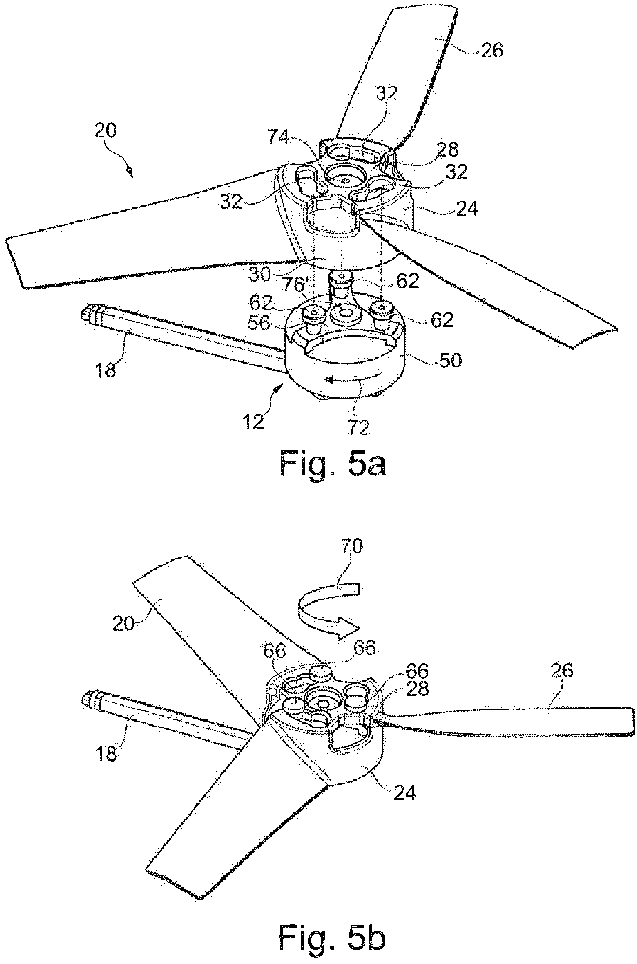

Plus précisément, la cage tournante 50 comprend une jupe latérale cylindrique 52 dont le diamètre extérieur est égal au diamètre intérieur de la paroi cylindrique 30 du moyeu 24 de l'hélice, de manière à pouvoir emboiter ce moyeu sur la cage tournante 50, avec un très léger jeu pour pouvoir faire tourner l'hélice autour de la cage lors du montage/démontage de cette hélice sur le moteur, comme expliqué plus bas en référence aux Figures 5a et 5b.

La jupe latérale 52 porte côté intérieur les éléments magnétiques (aimants permanents) 54 destinés à être entrainés par le champ tournant créé par les bobinages 46 disposés en vis-à-vis.

En partie supérieure, la cage tournante comprend une face aplatie ou flasque 56 en forme de disque plat, contre lequel est destinée à s'appliquer la face intérieure de la paroi supérieure 28 du moyeu de l'hélice lorsque celle-ci sera emboitée sur la cage tournante. Dans l'exemple illustré, ce flasque 56 est relié à la jupe latérale 52 par des bras radiaux 58, de manière à ménager des ouvertures permettant le refroidissement des bobinages et présentant en outre l'avantage d'alléger d'autant la structure. La cage tournante 50 est montée sur un arbre central fixe 60 du moteur, sur lequel elle peut tourner librement, n'étant jamais freinée lorsque le moteur n'est pas alimenté.

Le flasque 56 de la cage tournante supporte une pluralité de pions 62, dont le nombre et la disposition correspondent à ceux des boutonnières 32 du moyeu de l'hélice. Chaque pion est formé d'une partie cylindrique centrale 64 surmontée d'une tête élargie 66. L'écartement 68 entre la surface du flasque 56 et le dessous de la tête 66 du pion est égal à l'épaisseur de la paroi supérieure 28 du moyeu de l'hélice, ce qui permet de contraindre ce dernier dans la direction verticale une fois l'hélice montée sur le moteur.

Une autre fonction des pions 62 est de permettre d'agripper le rotor à la main lorsque l'hélice est montée sur le moteur (configuration des Figures 4 et 5b) par l'intermédiaire des têtes saillantes 66 qui dépassent de la paroi supérieure 28 du moyeu de l'hélice. Afin d'éviter le glissement des doigts sur les têtes de pions 66, ces têtes présentent une hauteur et un diamètre suffisants pour pouvoir faire prise, et peuvent éventuellement présenter en outre une arête ou autre forme anguleuse.

Enfin, les pions 62 assurent l'entrainement de l'hélice par le moteur, par l'intermédiaire de la tige cylindrique 64 du pion, qui vient s'appuyer contre l'épaisseur du moyeu au niveau de l'extrémité avant 36 de la fente 32.

Les pions 62 peuvent être réalisés de diverses manières, par exemple moulés ou usinés dans la partie supérieure de la cage tournante, ou bien être formés d'éléments rapportés tels que vis épaulées ou inserts surmoulés ou montés en force.

Les Figures 5a et 5b sont des vues en perspective du moteur et de l'hélice expliquant la manière de monter l'hélice sur le moteur, respectivement au moment du positionnement de l'hélice au-dessus de la cage tournante du moteur, et après assemblage final de ces deux éléments.

La première phase de l'opération, illustrée Figure 5a, consiste à positionner l'hélice au-dessus du moteur de sorte que les têtes des pions 62 se situent au droit des extrémités arrière, élargies 38 de chacune des boutonnières 32. L'hélice est alors emboitée sur la cage tournante 50, les pions 62 traversant par leur tête les boutonnières 32 au niveau de l'extrémité élargie.

La phase suivante, illustrée Figure 5b, consiste à faire tourner l'hélice d'une fraction de tour dans un sens (flèche 70) contraire de celui de rotation du moteur et de l'hélice (flèche 72). Cette manoeuvre permet de positionner la tige cylindrique 64 de chaque pion contre l'extrémité avant 36, autorisant ainsi la transmission à l'hélice de l'effort d'entrainement par la cage tournante du moteur.

Avantageusement, l'épaisseur du flasque est légèrement augmentée dans la région de l'extrémité avant 36, de manière à procurer un effet de blocage avec ajustement serré des pions et du moyeu de l'hélice dans la position finale fonctionnelle, ce qui évite d'avoir des tolérances dimensionnelles trop strictes sur les dimensions des pions.

Il est possible de prévoir un détrompage simple entre les hélices respectivement rotatives et contrarotatives du drone en ménageant, ou non, selon le type d'hélice une ouverture centrale 74 (Figures 2 et 5a) au centre du moyeu 24 de l'hélice, et en prévoyant pour l'axe central 60 du moteur de réaliser au niveau du flasque une partie saillante 76 (comme sur la Figure 4) ou au contraire non saillante (comme en 76' sur les Figures 3 et 5a). Il devient de ce fait impossible de monter des hélices dépourvues d'orifice central 74 sur des moteurs comportant un axe saillant 76, et l'utilisateur ne pourra pas monter les quatre hélices du drone autrement que dans leur configuration correcte de rotation.

## Revendications

1. Un drone (10) à voilure tournante comprenant un corps de drone (16) et une pluralité de blocs propulseurs (12) comprenant chacun :
- une hélice (20) comprenant un moyeu (24) et une pluralité de pales (26) ; et
- un moteur électrique (14) du type moteur synchrone sans balais à cage tournante, avec un stator relié au corps du drone et un rotor mobile autour d'un axe de rotation du moteur pour l'entrainement de l'hélice, dans lequel :
- le bloc propulseur est du type à entrainement direct ;
- le rotor est solidaire en rotation du moyeu de l'hélice et solidaire d'un flasque (56) supérieur s'étendant dans un plan radial par rapport à l'axe de rotation ; et
- il est prévu des moyens d'agrippement du flasque,
**caractérisé en ce qu'**il comprend en outre :
- des moyens réversibles de couplage rapide de l'hélice au rotor entre :
• une position découplée permettant l'emboitement du moyeu sur le flasque, et
• une position verrouillée solidarisant mécaniquement en rotation le moyeu sur le flasque,
le passage de la position découplée à la position verrouillée étant opéré par une rotation relative d'une fraction de tour du moyeu de l'hélice par rapport au flasque dans un sens contraire du sens de rotation du moteur électrique,
et lesdits moyens d'agrippement du flasque étant des moyens d'agrippement dans ladite position verrouillée.

2. Le drone de la revendication 1, dans lequel les moyens réversibles de couplage rapide comprennent :
- sur le flasque, une pluralité de pions (62) disposés radialement à distance de l'axe de rotation, chaque pion comprenant une partie de tige (64) surmontée par une tête élargie (66) propre à assurer la retenue du moyeu contre le flasque ; et
- sur le moyeu, une pluralité de boutonnières (32) dont le nombre et la disposition correspondent au nombre et à la disposition des pions sur le flasque, chaque boutonnière comprenant une fente curviligne (34) s'étendant le long d'une circonférence, la largeur de la fente correspondant à la partie de tige du pion qui lui correspond, et la fente comprenant à une première extrémité (38) une partie agrandie dont la dimension permet l'introduction de la tête du pion.

3. Le drone de la revendication 2, dans lequel en position verrouillée la tête de pion fait saillie au-dessus de la surface supérieure du moyeu.

4. Le drone de la revendication 2, dans lequel les moyens d'agrippement du flasque comprennent une partie saillante avec une arête, formée sur les têtes des pions.

5. Le drone de la revendication 2, dans lequel les bords de la fente présentent une épaisseur accrue à proximité d'une seconde extrémité opposée à la première extrémité, cette épaisseur étant définie, par rapport à l'écartement entre la surface supérieure du flasque et la surface inférieure de la tête de pion de manière à réaliser avec la tête de pion un ajustement avec jeu en position découplée et un ajustement serré en position verrouillée.

6. Le drone de la revendication 1, dans lequel le rotor comprend une jupe latérale cylindrique (52) s'étendant à partir du flasque supérieur, cette jupe portant des éléments magnétiques (54) de la cage tournante et définissant avec le flasque un volume intérieur logeant des bobinages (46) du stator du moteur.

7. Le drone de la revendication 1, dans lequel il est en outre prévu des moyens détrompeurs, comprenant un axe du rotor faisant saillie (76), ou non (76'), au-dessus du flasque et un orifice central (74) formé, ou non, dans le moyeu, de manière à empêcher l'emboitement d'un moyeu dépourvu d'orifice central sur un flasque pourvu d'un axe saillant.

## Patentansprüche

1. Drehflügel-Drone (10), aufweisend einen Dronenkörper (16) und eine Vielzahl von Antriebseinheiten (12), welche jeweils Folgendes ausweisen:
- einen Propeller (20), welcher eine Nabe (24) und eine Vielzahl von Flügeln (26) aufweist; und
- einen elektrischen Motor (14) von der Bauart eines bürstenlosen Außenläufer-Synchronmotors mit einem mit dem Körper der Drone verbundenen Stator und einem um eine Drehachse des Motors beweglichen Rotors für den Antrieb des Propellers,
bei der:
- die Antriebseinheit von der Bauart eines Direktantriebs ist;
- der Rotor drehfest mit der Nabe des Propellers verbunden und fest mit einem oberen Flansch (56) verbunden ist, welcher sich in einer radialen Ebene in Bezug auf die Drehachse erstreckt; und
- Mittel zum Festhalten des Flansches vorgesehen sind,
**dadurch gekennzeichnet, dass** sie außerdem Folgendes aufweist:
- reversible Mittel zur schnellen Kopplung des Propellers an den Rotor zwischen:
einer gelösten Position, welche die Einpassung der Nabe auf den Flansch ermöglicht, und
einer verriegelten Position, welche die Nabe auf dem Flansch mechanisch drehfest verbindet,
wobei der Übergang von der gelösten Position in die verriegelte Position durch eine relative Drehung um einen Bruchteil einer Umdrehung der Nabe des Propellers in Bezug auf den Flansch in einer zur Drehrichtung des elektrischen Motors entgegen gesetzten Richtung bewirkt wird,
und wobei die Mittel zum Festhalten des Flansches Festhaltemittel in der verriegelten Position sind.

2. Drone nach Anspruch 1, bei welcher die reversiblen Mittel zur schnellen Kopplung Folgendes aufweisen:
- eine Vielzahl von Zapfen (62) auf dem Flansch, welche von der Drehachse radial beabstandet angeordnet sind, wobei jeder Zapfen einen Stangenabschnitt (64) aufweist, welcher von einem aufgeweiteten Kopf (66) überragt wird, welcher geeignet ist, das Festhalten der Nabe an dem Flansch zu gewährleisten; und
- eine Vielzahl von Aussparungen (32) in der Nabe, deren Anzahl und Anordnung der Anzahl und Anordnung der Zapfen auf dem Flansch entsprechen, wobei jede Aussparung einen gekrümmten Schlitz (34) aufweist, welcher sich entlang eines Kreisumfangs erstreckt, wobei die Breite des Schlitzes dem Stangenabschnitt des ihm entsprechenden Zapfens entspricht, und der Schlitz an einem ersten Ende (38) einen erweiterten Abschnitt aufweist, dessen Abmessung die Einführung des Kopfes des Zapfens ermöglicht.

3. Drone nach Anspruch 2, bei der der Kopf des Zapfens in verriegelter Position über die obere Fläche der Nabe hinaus vorsteht.

4. Drone nach Anspruch 2, bei der die Mittel zum Festhalten des Flansches einen vorspringenden Abschnitt mit einem Steg aufweisen, welcher auf den Köpfen der Zapfen ausgebildet ist.

5. Drone nach Anspruch 2, bei der die Ränder der Schlitzes eine in der Nähe des dem ersten Ende gegenüberliegenden zweiten Endes eine erhöhte Dicke aufweisen, wobei diese Dicke in Bezug auf den Abstand zwischen der oberen Fläche des Flansches und der unteren Fläche des Zapfenkopfes derartig festgelegt wird, dass mit dem Zapfenkopf eine Einstellung mit Spiel in gelöster Position und eine eingespannte Einstellung in verriegelter Position verwirklicht wird.

6. Drone nach Anspruch 1, bei der der Rotor eine seitliche, zylindrische Schürze (52) aufweist, welche sich von dem oberen Flansch ausgehend erstreckt, wobei die Schürze magnetische Elemente (54) des Außenläufers trägt und mit dem Flansch ein inneres Volumen festlegt, welches Wicklungen (46) des Stators des Motors aufnimmt.

7. Drone nach Anspruch 1, bei der außerdem Mittel zur Unverwechselbarkeit vorgesehen sind, welche eine über den Flansch hinaus vorspringende (76) oder nicht vorspringende (76') Rotorachse und eine zentrale Öffnung (74) aufweisen, welche in der Nabe ausgebildet ist oder nicht, so dass die Einpassung einer Nabe ohne zentraler Öffnung auf einem mit einer vorspringenden Achse versehenen Flansch verhindert wird.

## Claims

1. A rotary-wing drone (10) comprising a drone body (16) and a plurality of propulsion units (12) each comprising:
- a propeller (20) comprising a hub (24) and a plurality of blades (26); and
- an electric motor (14) of the rotary-cage brushless synchronous type, with a stator connected to the drone body and a rotor mobile about an axis of rotation of the motor for driving the propeller,
wherein:
- the propulsion unit is of the gearless type;
- the rotor is rotationally integral with the propeller hub and integral with an upper flange (56) extending in a radial plane with respect to the axis of rotation; and
- means for gripping the flange are provided,
**characterized in that** it further comprises:
- reversible means for the fast coupling of the propeller to the rotor between:
• a decoupled position allowing the interlocking of the hub onto the flange, and
• a locked position mechanically making the hub rotationally integral with the flange,
the switching from the decoupled position to the locked position being operated by a relative rotation of the propeller hub with respect to the flange by a fraction of a turn, in a direction opposite to the direction of rotation of the electric motor,
and said means for gripping the flange being means for gripping the latter in said locked position.

2. The drone of claim 1, wherein the reversible fast coupling means comprise:
- on the flange, a plurality of studs (62) arranged radially remote from the axis of rotation, each stud comprising a rod portion (64) topped with an enlarged head (66) adapted to ensure the holding of the hub against the flange; and
- on the hub, a plurality of buttonholes (32) whose number and arrangement correspond to the number and arrangement of the studs on the flange, each buttonhole comprising a curvilinear slot (34) extending along a circumference, the width of the slot corresponding to the rod portion of the corresponding stud, and the slot comprising at a first end (38) an enlarged portion whose size allows the introduction of the stud head.

3. The drone of claim 2, wherein, in the locked position, the stud head projects above the upper surface of the hub.

4. The drone of claim 2, wherein the flange gripping means comprise a projecting portion with a ridge, formed on the stud heads.

5. The drone of claim 2, wherein the edges of the slot have an increased thickness near a second end opposite to the first end, this thickness being defined, with respect to the spacing between the upper surface of the flange and the lower surface of the stud head, so as to form with the stud head a loose fit in the decoupled position and a press fit in the locked position.

6. The drone of claim 1, wherein the rotor comprises a cylindrical lateral skirt (52) extending from the upper flange, this skirt carrying magnetic elements (54) of the rotary cage and defining with the flange an inner volume accommodating windings (46) of the motor stator.

7. The drone of claim 1, wherein foolproofing means are further provided, which comprise a axis of the rotor, projecting (76), or not (76'), above the flange and a central orifice (74) formed, or not, in the hub, so as to prevent the interlocking of a hub devoid of a central orifice onto a flange provided with a projecting axis.
